# NEUE EUROPÄISCHE PATENTSCHRIFT

(11) **EP 2 576 297 B2**
(45) Veröffentlichungstag und Bekanntmachung des Hinweises auf die Entscheidung über den Einspruch: **22.06.2022**
(45) Hinweis auf die Patenterteilung: 12.07.2017
(21) Anmeldenummer: 11721771.1
(22) Anmeldetag: 25.05.2011
(51) Int. Cl.: B60T 7/20, B60T 8/172, B60T 8/1755, B60T 8/30, B60T 8/32, B60T 13/66, B60T 13/68, B60T 17/22, B60T 8/17, B60T 8/34, B60T 8/36, B60T 8/88, B60T 13/74

(54) **VERFAHREN ZUR STEUERUNG EINER BREMSANLAGE EINES FAHRZEUGS MIT ELEKTRONISCH GEREGELTEM HINTERACHSBREMSKREIS UND PNEUMATISCH GESTEUERTEM VORDERACHSBREMSKREIS**
METHOD FOR CONTROLLING A BRAKE INSTALLATION OF A VEHICLE WITH ELECTRONICALLY REGULATED REAR-AXLE BRAKE CIRCUIT AND PNEUMATICALLY CONTROLLED FRONT-AXLE BRAKE CIRCUIT
PROCÉDÉ DE COMMANDE D'UN SYSTÈME DE FREINAGE D'UN VÉHICULE COMPRENANT UN CIRCUIT DE FREINAGE D'ESSIEU ARRIÈRE À RÉGULATION ÉLECTRONIQUE ET UN CIRCUIT DE FREINAGE D'ESSIEU AVANT À COMMANDE PNEUMATIQUE

(30) Priorität: 28.05.2010 DE 102010021909
(43) Veröffentlichungstag der Anmeldung: 10.04.2013
(73) Patentinhaber: KNORR-BREMSE Systeme für Nutzfahrzeuge GmbH, 80809 München (DE)
(72) Erfinder: HERGES, Michael, 80935 München (DE); FRANK, Peter, H-1112 Budapest (HU); HECKER, Falk, 71706 Markgröningen (DE)
(74) Vertreter: Maiwald Patent- und Rechtsanwaltsgesellschaft mbH
(86) Internationale Anmeldenummer: PCT/EP2011/058528
(87) Internationale Veröffentlichungsnummer: WO 2011/147859

(56) Entgegenhaltungen:
- EP-A2- 0 586 203
- WO-A1-95/16594
- WO-A1-03/011664
- WO-A1-2009/152981
- DE-A1- 3 149 110
- DE-A1- 3 603 143
- DE-A1- 19 653 264
- DE-A1-102008 003 380
- DE-B3-102008 009 043
- DE-C1- 19 814 867

## Beschreibung

Die Erfindung betrifft ein Verfahren zur Steuerung einer druckmittelbetätigten und wenigstens teilweise elektronischen Bremsanlage eines Fahrzeugs mit wenigstens zwei Achsen gemäß dem Oberbegriff von Anspruch 1.

Demgegenüber sind aus dem Stand der Technik auch Bremsanlagen mit geringerem Funktionsumfang und damit auch reduziertem Bauaufwand bekannt, beispielsweise aus der DE 101 55 952 A1, bei welchen die von einem Fußbremsventil erzeugten Bremsdrücke für die Vorderachse und die Hinterachse jeweils durch ABS-Drucksteuerventile fahrerunabhängig so verändert werden können, dass lediglich eine rad- oder achsweise Bremsschlupfregelung (ABS) mittels Drucksenken, Druckhalten oder Drucksteigern verwirklicht werden kann.

Ein gattungsgemäßes Verfahren bzw. eine gattungsgemäße Bremsanlage eines Fahrzeugs ist aus WO 95/16594 A1 bekannt. Dort ist für die Vorderachse eine konventionelle pneumatische Abbremsung und für die Hinterachse eine elektrische oder pneumatische Ansteuerung mit Bremsdruckregelung vorgesehen. Dadurch können an den lediglich pneumatisch gesteuerten Bremsen der Vorderachse die für eine Druckregelung ansonsten notwendigen Komponenten wie beispielsweise Drucksensoren und Regelungselektronik entfallen. Für die Steuerung der Anhängerbremsen eines Anhängers ist eine Kombination aus einem Druckregelmodul und einem Anhängersteuerventil vorgesehen, wobei das Anhängersteuerventil bei einem Ausfall eines elektrisch gesteuerten Proportionalventils des Druckregelmoduls von dem von dem Vorderachsbremskreis stammenden Druck gesteuert wird.

Bei der Bremsanlage gemäß DE 198 14 867 C1 werden die Bremsdrücke an der Vorderachse wie auch an der Hinterachse druckgeregelt, an der Vorderachse über ABS-Drucksteuerventile in Kombination mit einem Drucksensor und an der Hinterachse über ein Druckregelmodul. Damit ist diese Bremsanlage wie diejenige der eingangs erwähnten DE 199 23455A1 relativ aufwändig aufgebaut. Dort wird nicht offenbart, wie die Bremsen eines eventuell an das Fahrzeug angehängten Anhängers gesteuert werden. Bei DE 196 53 264 A1 ist ebenfalls sowohl für die Vorderachse als auch für die Hinterachse eine Druckregelung mittels jeweils eines Druckregelmoduls mit Drucksensor vorgesehen. Damit sind diese Bremsanlage wie diejenige der eingangs erwähnten DE 199 23 455 A1 relativ aufwändig aufgebaut. Die Ansteuerung eines Anhängersteuermoduls zur Steuerung der Anhängerbremsen erfolgt zum einen über einen elektrischen Steuerkreis und zum andern über den pneumatischen Steuerkreis der Vorderachse.

Bei der Bremsanlage nach DE 36 03 143 A1 wird ein Anhängersteuerventil zur Steuerung der Anhängerbremsen einerseits von einem pneumatischen Steuerkreis der Vorderachse wie auch von einem pneumatischen Steuerkreis der Hinterachse gesteuert. Eine elektrische Steuerung des Anhängersteuerventils ist indes nicht vorgesehen.

Der Erfindung liegtdemgegenüber die Aufgabe zugrunde, ein Verfahren zur Steuerung einer Bremsanlage mit pneumatisch gesteuerten Bremsen an einer Achse und mit elektro-pneumatischer Bremsdruckregelung an einer weiteren Achse bzw. eine solche Bremsanlage derart fortzubilden, dass mit einem möglichst geringem Aufwand und mit hoher Sicherheit die Anhängerbremsen gesteuert werden können.

Diese Aufgabe wird erfindungsgemäß durch die Merkmale von Anspruch 1 gelöst.

### Offenbarung der Erfindung

Der Erfindung geht von dem Gedanken aus, dass die Bremsdrücke für Radbremsen an einer Achse, beispielsweise einer Vorderachse ausschließlich druckgesteuert erzeugt und die Bremsdrücke für Radbremsen an wenigstens einer weiteren Achse, beispielsweise einer Hinterachse elektronisch geregelt werden.

Mit anderen Worten geht die Erfindung von einer Bremsanlage aus, bei welcher die Bremsdrücke an der einen Achse ausschließlich pneumatisch im Sinne einer Drucksteuerung gesteuert und nur die Bremsdrücke an der wenigstens einen weiteren Achse im Sinne einer Druckregelung elektronisch geregelt werden. Unter einer ausschließlich druckgesteuerten Erzeugung der Bremsdrücke für die Radbremsen der einen Achse ist zu verstehen, dass hierbei nicht etwa noch ein Bremskreis mit einer elektronischen Bremsdruckregelung überlagert ist, bei welcher ein Ist-Bremsdruck auf einen Soll-Bremsdruck eingeregelt wird. Vielmehr ist ausschließlich ein pneumatischer Bremskreis ohne Bremsdruckregelung vorhanden.

Dadurch können an den lediglich pneumatisch gesteuerten Bremsen der einen Achse die für eine Druckregelung ansonsten notwendigen Komponenten wie beispielsweise Drucksensoren und Regelungselektronik entfallen.

Bei dem Verfahren gemäß der Erfindung ist vorgesehen, dass
- die Bremsdrücke für die Radbremsen an der einen Achse oder die Bremswirkung an den Rädern der einen Achse repräsentierende elektrische Signale erzeugt werden und
- wenigstens abhängig von den die Bremsdrücke für die Radbremsen an der einen Achse oder von den die Bremswirkung an den Rädern der einen Achse repräsentierenden elektrischen Signalen die Bremsdrücke für Radbremsen eines Anhängers des Fahrzeugs erzeugt werden, wobei
- für den Fall, dass keine die Bremsdrücke für die Radbremsen an der einen Achse oder die Bremswirkung an den Rädern der einen Achse repräsentierende elektrische Signale gebildet werden können, die Bremsdrücke für die Radbremsen des Anhängers abhängig von den Steuer- oder Backup-Drücken für die Radbremsen der wenigstens einen weiteren Achse elektro-pneumatisch erzeugt werden.

Für den Fall, dass keine die Bremsdrücke für die Radbremsen an der einen Achse (z.B. Vorderachse) oder die Bremswirkung an den Rädern der einen Achse repräsentierende elektrische Signale gebildet werden können, werden daher die Bremsdrücke für die Radbremsen des Anhängers abhängig von den Backup-Drücken für die Radbremsen der wenigstens einen weiteren Achse (z.B. Hinterachse) erzeugt. Diese Backup-Drucksteuerung ist dann allerdings elektro-pneumatisch, wie die Ausführungen unten zeigen.

Fällt die Steuerung durch den Backup-Druck der wenigstens einen weiteren Achse aus, so ist noch eine Bildung des Anhängerbremsdrucks auf der Basis des Bremsdrucks an der einen Achse möglich.

Damit wird die vom Gesetzgeber geforderte wenigstens zweikreisige Ansteuerung der Anhängerbremsen realisiert.

Die Bremsanlage beinhaltet wenigstens:
- ein Fußbremsventil oder ein Fußbremsmodul, welches abhängig von einer Betätigung durch den Fahrer direkt Bremsdrücke für Radbremsen der einen Achse erzeugt,
- wenigstens ein Druckregelmodul, welches abhängig von Bremsanforderungssignalen des Fußbremsventils oder des Fußbremsmoduls die Bremsdrücke für die Radbremsen an der wenigstens einen weiteren Achse elektronisch regelt, wobei
- das wenigstens eine Druckregelmodul für die Radbremsen der wenigstens einen weiteren Achse (z.B. Hinterachse) ausgebildet ist, dass es die Bremsdrücke für die Radbremsen an der wenigstens einen weiteren Achse bei einem Ausfall der elektronischen Regelung abhängig von Steuer- oder Backup-Drücken für diese Achse bildet.

Die Bremsanlage wird durch das oben beschriebene Verfahren gesteuert und umfasst:
- Ein Anhängersteuermodul, welches Bremsdrücke für die Radbremsen eines Anhängers des Fahrzeugs abhängig von den die Bremsdrücke für die Radbremsen an der einen Achse oder von den die Bremswirkung an den Rädern der einen Achse repräsentierenden elektrischen Signalen erzeugt,
- Mittel zur Erzeugung von die Bremsdrücke für die Radbremsen an der einen Achse oder von die Bremswirkung an den Rädern der einen Achse repräsentierenden elektrischen Signalen, wobei
- für den Fall, dass keine die Bremsdrücke für die Radbremsen an der einen Achse oder die Bremswirkung an den Rädern der einen Achse repräsentierende elektrische Signale gebildet werden können, über einen elektrischen Kreis, der der elektronisches Steuergerät beinhaltet, die Bremsdrücke für die Radbremsen des Anhängers des Fahrzeugs abhängig von den Steuer- oder Backup-Drücken für die Radbremsen der wenigstens einen weiteren Achse erzeugt werden, wobei
- das wenigstens eine Druckregelmodul wenigstens einen integrierten Drucksensor umfasst, welcher die Steuer- oder Backup-Drücke für die Radbremsen der wenigstens einen weiteren Achse repräsentierende elektrische Signale erzeugt, in deren Abhängigkeit in dem Anhängersteuermodul die Bremsdrücke für die Radbremsen des Anhängers gebildet werden.

Die Steuer- oder Backup-Drücke für die Radbremsen der wenigstens einen weiteren Achse (z.B. Hinterachse) werden dabei von dem Fußbremsventil oder Fußbremsmodul direkt erzeugt.

Durch die in den Unteransprüchen aufgeführten Maßnahmen sind vorteilhafte Weiterbildungen und Verbesserungen der in Anspruch 1 angegebenen Erfindung möglich.

Besonders bevorzugt wird die Drucksteuerung der Radbremsen der einen Achse dadurch ergänzt, dass die Bremsdrücke für die Radbremsen an der einen Achse abhängig vom Bremsschlupf der Räder dieser Achse geregelt werden, damit diese Achse über eine ABS-Funktionalität verfügt. Regelgröße ist dabei aber nicht der Bremsdruck sondern der Bremsschlupf.

Gemäß einer besonders zu bevorzugenden Ausführungsform werden die Bremsdrücke für die Radbremsen an der einen Achse (z.B. Vorderachse) oder die Bremswirkung an den Rädern der einen Achse repräsentierende elektrische Signale erzeugt und abhängig von diesen elektrischen Signalen die Bremsdrücke für die Radbremsen an der wenigstens einen weiteren Achse (z.B. Hinterachse) elektronisch auf Soll-Bremsdrücke eingeregelt.

Mittels der Steuerung des elektrisch geregelten Bremskreises der wenigstens einen weiteren Achse durch die der einen Achse zugeordneten und vom Bremsdruck oder von der Bremswirkung an dieser einen Achse abgeleiteten elektrischen Signale wird eine Kopplung der beiden Bremskreise bewerkstelligt. Diese Kopplung erlaubt es, typische Funktionen elektronischer Bremssysteme (EBS) wie etwa eine Differenzschlupfregelung, welche beispielsweise den Bremsdruck an der Hinterachse abhängig vom Differenzschlupf reduziert, eine Haltestellenbremse, eine Berganfahrhilfe (hill holder), einen Stauassistenten, eine Regelung zur Vermeidung eines Vorneüberschlags des Zugfahrzeugs (tilt-prevention) oder eine Koppelkraftregelung zwischen Zugfahrzeug und Anhänger auch bei einer Bremsanlage mit einem nur pneumatisch gesteuerten Bremskreis zu realisieren, so dass der Funktionsumfang gegenüber elektronischen Bremssystemen im Wesentlichen nicht eingeschränkt wird.

Diese Koppelung kann beispielsweise dadurch realisiert sein, dass das Fußbremsventil die Bremsdrücke für die Radbremsen der einen Achse, beispielsweise der Vorderachse erzeugt, wobei diese Bremsdrücke mittels eines Drucksensors gemessen werden, um die Bremsdrücke für die Radbremsen an der einen Achse repräsentierenden elektrischen Signale zu erzeugen.

Alternativ könnten die die Bremsdrücke für die Radbremsen an der einen Achse repräsentierenden elektrischen Signale auch aus der Stellung eines Bremswertgebers des Fußbremsventils und einer Kennlinie oder aus dem während einer Bremsung vorliegenden Differenzschlupf zwischen der einen Achse und der wenigstens einen weiteren Achse ermittelt werden.

Nicht zuletzt kann die durch den Bremsdruck an der einen Achse hervorgerufene Bremswirkung beispielsweise mittels Raddrehzahlsensoren an dieser einen Achse gemessen und in das elektronische Steuergerät eingesteuert werden, welches dann den elektrischen Bremskreis der wenigstens einen weiteren Achse entsprechend steuert.

Neben den Bremsdrücken für die Radbremsen an der einen Achse können auch weitere Faktoren wie beispielsweise die Beladung, die Achslasten, der Differenzschlupf zwischen den Achsen und auch der Belagverschleiß maßgebend für die Bildung der Bremsdrücke für die Radbremsen der wenigstens einen weiteren Achse sein.

Von dem Fußbremsventil oder Fußbremsmodul werden bevorzugt auch Steuer- oder Backup-Drücke für die Radbremsen an der wenigstens einen weiteren Achse (z.B. Hinterachse) erzeugt, aus welchen bei einem Ausfall der elektronischen Bremsdruckregelung für diese wenigstens eine weitere Achse oder des Vorderachsbremsdrucks die Bremsdrücke für diese wenigstens eine weitere Achse rein druckmittelgesteuert erzeugt werden können. Damit kann der Hinterachsbremskreis einerseits durch die auf den Vorderachsbremsdrücken bzw. auf der Vorderachsbremswirkung basierenden elektrischen Signale elektronisch geregelt und andererseits auch mittels der parallel erzeugten Steuer- oder Backup-Drücke druckmittelgesteuert werden, wodurch eine zweikreisige Steuerung des Hinterachsbremskreises sowie eine unterlegte Sicherheitsebene für den Fall geschaffen wird, dass die elektronische Bremsdruckregelung für die Hinterachse bzw. der Vorderachsbremsdruck selbst ausfällt.

Für den Fall, dass keine die Bremsdrücke für die Radbremsen an der einen Achse (z.B. Vorderachse) oder die Bremswirkung an den Rädern der einen Achse repräsentierende elektrische Signal gebildet werden können, weil beispielsweise die Elektrik ausgefallen ist, können die Bremsdrücke für die Radbremsen des Anhängers bevorzugt auch direkt abhängig von den Bremsdrücken für die Radbremsen an der einen Achse (z.B. Vorderachse) erzeugt werden, also durch eine reine Drucksteuerung.

Denn bei einem Ausfall der Elektrik werden die Bremsdrücke für die Radbremsen des Anhängers abhängig von den Bremsdrücken für die Radbremsen an der einen Achse (z.B. Vorderachse) im Sinne einer Drucksteuerung erzeugt.

Wie bereits oben erwähnt, sind Mittel zur Erzeugung von Bremsdrücke für die Radbremsen an der einen Achse oder von die Bremswirkung an den Rädern der einen Achse repräsentierenden elektrischen Signalen vorgesehen. Dabei regelt das Druckregelmodul bevorzugt abhängig von diesen elektrischen Signalen Bremsdrücke für die Radbremsen an der wenigstens einen weiteren Achse elektronisch. Unter dieser Regelung ist eine Bremsdruckregelung zu verstehen. Das heißt, dass ein Ist-Bremsdruck auf einen Soll-Bremsdruck eingeregelt wird.

Die Mittel zur Erzeugung der die Bremsdrücke für die Radbremsen an der einen Achse oder der die Bremswirkung an den Radbremsen an der einen Achse repräsentierenden elektrischen Signale beinhalten beispielsweise eines oder mehrere der folgenden Mittel:
a) wenigstens einen Drucksensor zur Messung der vom Fußbremsventil erzeugten Bremsdrücke für die Radbremsen an der einen Achse, oder
b) wenigstens einen elektrischen Kanal des Fußbremsmoduls,
c) Raddrehzahlsensoren zur Messung der Bremswirkung an den Radbremsen an der einen Achse aufgrund der dort herrschenden Bremsdrücke.

Damit eine ABS-Funktionalität an der einen Achse (z.B. Vorderachse) vorhanden ist, ist dort bevorzugt je Rad ein Drucksteuerventil, ein Raddrehzahlsensor sowie ein elektronisches Steuergerät mit Bremsschlupfregelelektronik vorgesehen.

Gemäß einer weiteren Ausführungsform könnte die eine rein pneumatisch gesteuerte Achse eine Hinterachse und die wenigstens eine weitere Achse mit elektronischer Bremsdruckregelung eine Vorderachse sein.

Weitere die Erfindung verbessernde Maßnahmen werden nachstehend gemeinsam mit der Beschreibung von Ausführungsbeispielen der Erfindung anhand der Zeichnung näher dargestellt.

### Zeichnung

In der Zeichnung zeigt
Fig.1 einen schematischen Schaltplan einer bevorzugten Ausführungsform einer Bremsanlage eines Fahrzeugs;
Fig.2 einen schematischen Schaltplan einer weiteren Ausführungsform einer Bremsanlage eines Fahrzeugs.

### Beschreibung der Ausführungsbeispiele

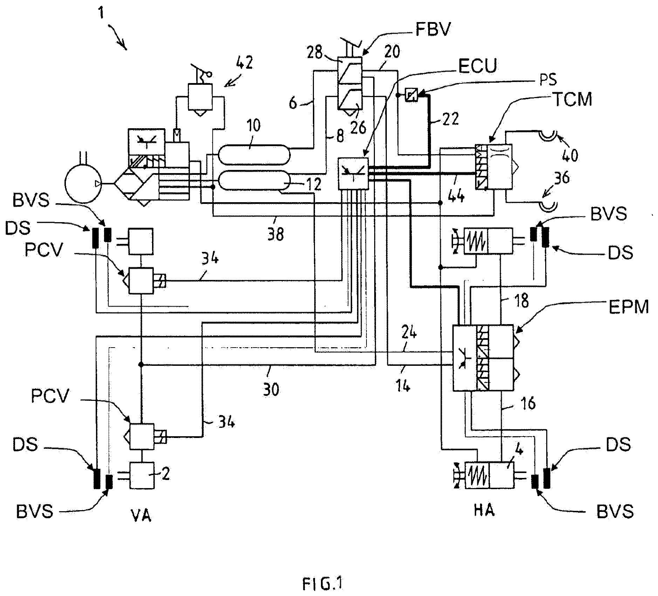

Die in Fig.1 gezeigte druckmittelbetätigte Bremsanlage 1 dient zum Abbremsen eines Zugfahrzeugs, welches auch zum Anhängerbetrieb geeignet ist.

Die Bremsanlage 1 ist bevorzugt elektro-pneumatisch ausgebildet und weist ein zweikanaliges pneumatisches Fußbremsventil FBV auf, welches abhängig von einer Betätigung durch den Fahrer für einen Vorderachsbremskreis Bremsdrücke für Radbremsen 2 einer Vorderachse VA sowie für einen Hinterachsbremskreis Steuer- bzw. Backup-Drücke für Radbremsen 4 einer Hinterachse HA erzeugt. Hierzu werden dem Fußbremsventil FBV über Vorratsleitungen 6, 8 Druckluft unter Vorratsdruck aus einem Vorderachs-Druckluftvorrat 10 und einem Hinterachs-Druckluftvorrat 12 zugeführt.

Im Einzelnen wird der vom Fußbremsventil FBV erzeugte Backup-Druck über eine Druckleitung 14 einem 2-Kanal-Druckregelmodul EPM der Hinterachse HA zugeführt, welches druckgesteuert durch den Steuer- bzw. Backup-Druck p_{HA} je Seite einen Hinterachs-Bremsdruck für einen Betriebsbremszylinder eines auch einen Federspeicherbremszylinder beinhaltenden Kombizylinders 4 über eine Bremsleitung 16, 18 aussteuert. Die pneumatisch durch den Backup-Druck gesteuerte Bildung des Hinterachs-Bremsdrucks ist jedoch nachrangig in Bezug zu einer elektrischen Steuerung des 2-Kanal-Druckregelmoduls EPM durch ein elektronisches Steuergerät ECU. Hierzu wird bevorzugt über einen Drucksensor PS der in einer vom Fußbremsventil FBV in einer Druckleitung 20 zu einem Anhängersteuermodul TCM geführte Vorderachs-Bremsdruck p_{VA} gemessen und ein diesen Druck repräsentierendes elektrisches Signal erzeugt, welches dann über eine elektrische Leitung 22 in das elektronische Steuergerät ECU eingesteuert wird. Dieses steuert dann wiederum abhängig von den elektrischen Signalen das 2-Kanal-Druckregelmodul EPM an, um aus dem über eine Vorratsleitung 24 aus dem Druckluftvorrat 12 des Hinterachsbremskreises herangeführten Vorratsdruck einen Hinterachs-Bremsdruck zu modulieren.

Das 2-Kanal-Druckregelmodul EPM verfügt über eine eigene Steuerelektronik und für jeden Kanal (rechte Seite, linke Seite) jeweils über ein Einlassventil, ein Auslassventil, ein Relaisventil, ein Backup-Ventil sowie über einen Drucksensor, um einen mit Hilfe des Drucksensors gemessenen pneumatischen Ist-Hinterachs-Bremsdruck auf einen durch das vom elektronischen Steuergerät ECU ausgesteuerte elektrische Signal repräsentierten Soll-Hinterachs-Bremsdruck im Sinne einer Druckregelung einregeln zu können.

Falls keine elektrische Steuerung durch das elektronische Steuergerät ECU beispielsweise wegen einer Störung des elektrischen Bremskreises oder eines Ausfalls des Vorderachs-Bremsdrucks (z.B. durch Leckage) erfolgen kann, dann schaltet das integrierte Backup-Ventil den vom Hinterachskanal 26 des Fußbremsventils FBV über die Druckleitung 14 herangeführten Steuer- bzw. - Backup-Druck p_{HA} auf den Steuereingang des integrierten Relaisventils, um einen entsprechenden Hinterachs-Bremsdruck zu erzeugen. Solche 2-Kanal-Druckregelmodule EPM sind beispielsweise aus der DE 42 27 084 A1 bekannt.

Der im Vorderachs-Kanal 28 des Fußbremsventils FBV erzeugte Vorderachs-Bremsdruck dient neben der pneumatischen Steuerung des Anhängersteuermoduls TCM vornehmlich zur Belüftung der Radbremszylinder 2 der Vorderachse VA mittels einer Druckleitung 30. In diese Druckleitung 30 ist bevorzugt je Seite ein ABS-Drucksteuerventil PCV geschaltet, um abhängig von dem jeweils an dem betreffenden Vorderrad vorliegenden Bremsschlupf einen optimalen Bremsschlupf einregeln zu können. Hierzu werden die ABS-Drucksteuerventile PCV über elektrische Leitungen 34 vom elektronischen Steuergerät ECU angesteuert, in welchem die ABS-Funktionalität implementiert ist. Die Bremsschlupfregelung erfolgt dabei durch zyklisches Drucksteigern, Druckhalten und Drucksenken in bekannter Weise. Das elektronische Steuergerät ECU erhält dabei die benötigte Information über den gerade vorliegenden Bremsschlupf bzw. die momentane Fahrzeuggeschwindigkeit über die Raddrehzahlsensoren DS.

Mittels der Raddrehzahlsensoren DS an der Vorderachse VA wird auch die durch den Bremsdruck p_{VA} an der Vorderachse VA hervorgerufene Bremswirkung gemessen und in das elektronische Steuergerät ECU eingesteuert, um alternativ oder auch abhängig von den daraufhin vom elektronischen Steuergerät ECU erzeugten Signalen den elektrischen Hinterachsbremskreis steuern zu können, beispielsweise im Sinne einer Differenzschlupfregelung.

Das Anhängersteuermodul TCM erzeugt in einem Kupplungskopf "Bremse" 36 einen pneumatischen Steuerdruck für die hier nicht gezeigten Radbremsen des Anhängers. Andererseits speist es einen von dem Druckluftvorrat 12 für die Hinterachse durch eine Vorratsleitung 38 abgeleiteten Vorratsdruck in einen Kupplungskopf "Vorrat" 40 ein.

Über eine hier nicht interessierende Feststellbremseinrichtung 42 können die Federspeicherbremsen der Kombizylinder 4 der Hinterachse HA und die Betriebsbremsen des Anhängers über das Anhängersteuermodul TCM eingebremst werden.

Wie das 2-Kanal-Druckregelmodul EPM der Hinterachse HA wird auch das Anhängersteuermodul TCM einerseits elektrisch und andererseits pneumatisch gesteuert, um die geforderte 2-kreisige Ansteuerung darzustellen. Die pneumatische Ansteuerung erfolgt unter anderem durch den Vorderachs-Bremsdruck p_{VA} wie bereits oben beschrieben wurde und die elektrische Ansteuerung abhängig von den den Vorderachs-Bremsdruck p_{VA} repräsentierenden elektrischen Signalen. Hierzu ist das Anhängersteuermodul TCM über eine elektrische Leitung 44 mit dem elektronischen Steuergerät ECU verbunden, welches die Signale des den Vorderachs-Bremsdruck p_{VA} messenden Drucksensors PS verarbeitet.

Wegen der Druckleitung 20 zwischen dem Vorderachs-Kanal 28 und dem entsprechenden Druckeingang des Anhängersteuermoduls TCM können für den Fall, dass keine den Vorderachs-Bremsdruck p_{VA} repräsentierende elektrische Signale gebildet werden können, weil beispielsweise die Elektrik ausgefallen ist, die Bremsdrücke für die Radbremsen des Anhängers direkt abhängig vom Vorderachs-Bremsdruck p_{VA} erzeugt werden, also durch eine reine Drucksteuerung.

Darüber hinaus kann das Anhängersteuermodul TCM abhängig vom Steuer-oder Backup-Druck p_{HA} der Hinterachse HA gesteuert werden. Dazu wird durch den in das 2-Kanal-Druckregelmodul EPM der Hinterachse HA integrierten Drucksensor PS der Steuer- oder Backup-Druck p_{HA} der Hinterachse HA gemessen und diesen repräsentierende elektrische Signale erzeugt, welche in das elektronische Steuergerät ECU eingesteuert werden, das aus diesen wiederum elektrische Steuersignale für das Anhängersteuermodul TCM erzeugt, um dann ebenfalls Bremsdrücke für die Radbremsen des Anhängers am Kupplungskopf "Bremse" 36 zu erzeugen.

Daher können für den Fall, dass keine den Vorderachs-Bremsdruck repräsentierende elektrischen Signal gebildet werden können, z.B., weil der Vorderachs-Bremsdruck p_{VA} ausgefallen ist, die Bremsdrücke für die Radbremsen des Anhängers auch abhängig vom Hinterachs-Backup-Druck p_{HA} erzeugt werden, dann jedoch über einen elektrischen Kreis, der das elektronische Steuergerät ECU beinhaltet.

Fällt dagegen die elektrische Steuerung aus, so ist eine Bildung des Anhängerbremsdrucks direkt abhängig vom Vorderachsbremsdruck p_{VA} möglich.

Weiterhin werden in das elektronische Steuergerät Signale von radweise angeordneten Belagverschleißsensoren BVS eingesteuert, um diesem Informationen über den momentanen Ist-Bremsdruck und den Verschleißzustand der Bremsbeläge zu liefern.

Nicht zuletzt kann die pneumatische Hysterese des Fußbremsventils FBV an der Hinterachse HA elektronisch durch kurzzeitige Drucküberhöhung, bzw. - untersteuerung kompensiert werden ("negative Hysterese"). Dadurch ist auch bei Nutzfahrzeugen ein Bremsgefühl wie bei einem PKW möglich.

Weiterhin können die Druckabbaugradienten über die Drucksteuerventile PCV unterstützt werden, wodurch insbesondere an der Vorderachse VA kurze Lösezeiten möglich sind.

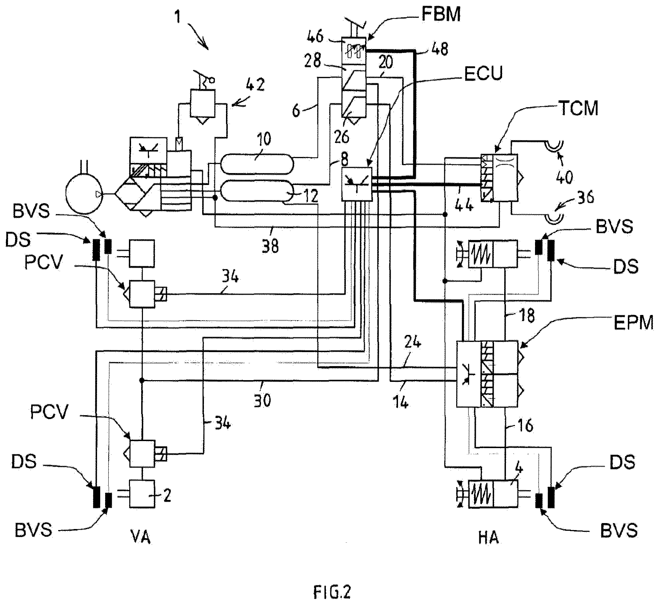

Bei der Fig.2 sind in Bezug zum Ausführungsbeispiel von Fig.1 identische bzw. gleich wirkende Bauelemente und Baugruppen mit den gleichen Bezugszahlen gekennzeichnet. Im Unterschied zur Fig.1 weist die Bremsanlage gemäß Fig.2 kein Fußbremsventil FBV, sondern ein Fußbremsmodul FBM mit einem eigenen elektrischen Kanal 46 mit elektrischer Signalleitung 48 zum elektronischen Steuergerät ECU auf, in welchem vom Betätigungsgrad abhängige elektrische Signale parallel zu den pneumatischen Signalen in dem Hinterachskanal 26 und in dem Vorderachskanal 28 erzeugt werden.

Anstatt durch den Drucksensor PS von Fig.1 werden die den Bremsdruck p_{VA} für die Radbremsen 2 an der Vorderachse VA repräsentierenden elektrischen Signale daher durch den elektrischen Kanal 46 des Fußbremsmoduls FBM erzeugt. Parallel hierzu dienen die Raddrehzahlsensoren DS zur Ermittlung der Bremswirkung an der Vorderachse VA aufgrund des Bremsdrucks p_{VA}. Mit diesen in das elektronische Steuergerät ECU eingesteuerten elektrischen Signalen wird dann der elektrische Hinterachsbremskreis bzw. das Anhängersteuermodul wie bei der vorangehend beschriebenen Ausführungsform gesteuert.

### Bezugszeichenliste

- BVS: Belagverschleißsensor
- DS: Raddrehzahlsensor
- ECU: Steuergerät
- EPM: Druckregelmodul
- FBV: Fußbremsventil
- FBM: Fußbremsmodul
- PS: Drucksensor
- PCV: ABS-Drucksteuerventil
- VA: Vorderachse
- HA: Hinterachse
- p_{HA}: Steuer-oder Backup-Druck Hinterachse
- p_{VA}: Bremsdruck Vorderachse
- 1: Bremsanlage
- 2: Radbremsen
- 4: Radbremsen
- 6: Vorratsleitung
- 8: Vorratsleitung
- 10: Druckluftvorrat
- 12: Druckluftvorrat
- 14: Druckleitung
- 16: Bremsleitung
- 18: Bremsleitung
- 20: Druckleitung
- 22: elektr. Leitung
- 24: Vorratsleitung
- 26: Hinterachskanal
- 28: Vorderachskanal
- 30: Druckleitung
- 34: elektr. Leitung
- 36: Kupplungskopf "Bremse"
- 38: Vorratsleitung
- 40: Kupplungskopf "Vorrat"
- 42: Feststellbremseinrichtung
- 44: elektr. Leitung
- 46: elektr. Kanal
- 48: Signalleitung

## Patentansprüche

1. Verfahren zur Steuerung einer druckmittelbetätigten und wenigstens teilweise elektronischen Bremsanlage (1) eines Fahrzeugs mit wenigstens zwei Achsen (VA, HA), wobei die Bremsdrücke (p_{VA}) für Radbremsen (2) an einer Achse (VA) druckgesteuert erzeugt und die Bremsdrücke (p_{HA}) für druckmittelbetätigte Radbremsen (4) an wenigstens einer weiteren Achse (HA) im Sinne einer Bremsdruckregelung zur Einregelung eines Ist-Bremsdrucks auf einen Soll-Bremsdruck elektronisch geregelt werden und Steuer- oder Backup-Drücke (p_{HA}) für die Radbremsen (4) an der wenigstens einen weiteren Achse (HA) erzeugt werden, aus welchen bei einem Ausfall der elektronischen Bremsdruckregelung für diese wenigstens eine weitere Achse (HA) die Bremsdrücke für diese wenigstens eine weitere Achse (HA) druckmittelgesteuert erzeugt werden, **dadurch gekennzeichnet, dass**
a) die Bremsdrücke (p_{VA}) für die Radbremsen (2) an der einen Achse (VA) oder die Bremswirkung an den Rädern der einen Achse (VA) repräsentierende elektrische Signale erzeugt werden und
b) wenigstens abhängig von den die Bremsdrücke (p_{VA}) für die Radbremsen (2) an der einen Achse (VA) oder von den die Bremswirkung an den Rädern der einen Achse (VA) repräsentierenden elektrischen Signalen die Bremsdrücke für Radbremsen eines Anhänger des Fahrzeugs erzeugt werden, wobei
c) für den Fall, dass keine die Bremsdrücke (p_{VA}) für die Radbremsen (2) an der einen Achse (VA) oder die Bremswirkung an den Rädern der einen Achse (VA) repräsentierende elektrische Signale gebildet werden können, die Bremsdrücke für die Radbremsen des Anhängers abhängig von den Steuer- oder Backup-Drücken (p_{HA}) für die Radbremsen (4) der wenigstens einen weiteren Achse (HA) elektro-pneumatisch erzeugt werden.

2. Verfahren nach Anspruch 1, **dadurch gekennzeichnet, dass** die Bremsdrücke (p_{VA}) für die Radbremsen (2) an der einen Achse (VA) abhängig vom Bremsschlupf der Räder dieser Achse (VA) geregelt werden.

3. Verfahren nach Anspruch 1 oder 2, **dadurch gekennzeichnet, dass** wenigstens abhängig von den die Bremsdrücke (p_{VA}) für die Radbremsen (2) an der einen Achse (VA) oder von den die Bremswirkung an den Rädern an der einen Achse (VA) repräsentierenden elektrischen Signalen die Bremsdrücke für die Radbremsen (4) an der wenigstens einen weiteren Achse (HA) bremsdruckgeregelt werden.

## Claims

1. Method for controlling a brake system (1) that is actuated by means of a pressure medium and is at least partially electronic, said brake system being in a vehicle that comprises at least two axles (VA, HA), wherein the brake pressures (pVA) for wheel brakes (2) on an axle (VA) are generated in a pressure-controlled manner and the brake pressures (pHA) for wheel brakes (4), which are actuated by means of a pressure medium, on at least one further axle (HA) are electronically regulated within the meaning of brake pressure regulation for regulating an actual brake pressure to a setpoint brake pressure and control or back-up pressures (pHA) for the wheel brakes (4) on the at least one further axle (HA) are generated, from which in the event of a failure of the electronic brake pressure regulation for this at least one further axle (HA) the brake pressures for this at least one further axle (HA) are generated in a pressure medium-controlled manner, **characterized in that**
a) electric signals are generated that represent the brake pressures (pVA) for the wheel brakes (2) on one axle (VA) or that represent the braking effect on the wheels of one axle (VA) and
b) the brake pressures for wheel brakes of a trailer of the vehicle are generated at least in response to the electric signals that represent the brake pressures (pVA) for the wheel brakes (2) on one axle (VA) or that represent the braking effect on the wheels on one axle (VA), wherein
c) for the case that it is not possible to generate electric signals that represent the brake pressures (pVA) for the wheel brakes (2) on one axle (VA) or that represent the braking effect on the wheels of one axle (VA) the brake pressures for the wheel brakes of the trailer are electropneumatically generated in dependence upon the control or back-up pressures (pHA) for the wheel brakes (4) of the at least one further axle (HA).

2. Method according to Claim 1, **characterized in that** the brake pressures (pVA) for the wheel brakes (2) on one axle (VA) are regulated in dependence upon the brake slip of the wheels of this axle (VA).

3. Method according to Claim 1 or 2, **characterized in that** the brake pressures for the wheel brakes (4) on the at least one further axle (HA) are brake-pressure regulated at least in response to the electric signals that represent the brake pressures (pVA) for the wheel brakes (2) on one axle (VA) or that represent the braking effect on the wheels on one axle (VA).

## Revendications

1. Procédé de commande d'un système (1) de freinage, à actionnement par un fluide de pression et, au moins en partie, électronique, d'un véhicule ayant au moins deux essieux (VA, HA), les pressions (p_{VA}) de freinage pour des freins (2) de roue sur un essieu (VA) étant produites d'une manière commandée en pression et les pressions (p_{HA}) de freinage pour des freins (4) de roue, actionnés par un fluide sous pression, sur au moins un autre essieu (HA) étant régulées électroniquement, dans le sens d'une régulation de la pression de freinage pour la régulation d'une pression de freinage réelle, et des pressions (P_{HA}) de commande ou de backup étant produites pour les freins (4) de roue sur au moins un autre essieu (HA), à partir desquelles, s'il se produit une panne de la régulation électronique de la pression de freinage pour ce au moins un autre essieu (HA), les pressions de freinage pour ce au moins un autre essieu (HA) sont produites d'une manière commandée par un fluide sous pression, **caractérisé en ce que**
a) on produit des signaux électriques représentant les pression (p_{VA}) de freinage pour les freins (2) de roue sur l'un des essieux (VA) ou l'effet de freinage sur les roues du un essieu (VA) et
b) au moins en fonction des signaux électriques représentant les pressions (p_{VA}) de freinage pour les freins (2) de roue du un essieu (VA) ou représentant l'effet de freinage sur les roues du un essieu (VA), on produit les pressions de freinage pour des freins de roue d'une remorque du véhicule, dans lequel
c) dans le cas où on ne peut pas former de signaux électriques représentant les pressions (p_{VA}) de freinage pour les freins (2) de roue sur le un essieu (VA) ou l'effet de freinage sur les roues au un essieu (VA), on produit électropneumatiquement des pressions de freinage pour les freins de roue de la remorque en fonction les pressions (P_{HA}) de commande ou de backup pour les freins (4) de roue du au moins un autre essieu (HA).

2. Procédé suivant la revendication 1, **caractérisé en ce que** l'on régule les pressions (pᵥₐ) de freinage pour les freins (2) de roue sur le un essieu (VA) en fonction du glissement de freinage des roues de cet essieu (VA).

3. Procédé suivant la revendication 1 ou 2, **caractérisé en ce que** l'on régule, en pression de freinage, les pressions de freinage pour les freins (4) de roue sur le au moins un autre essieu (HA), au moins en fonction des signaux électriques représentant les pressions (p_{VA}) de freinage pour les freins (2) de roue sur le un essieu (VA) ou l'effet de freinage sur les roues sur le un essieu (VA).
